# FASCICULE DE BREVET EUROPEEN

(11) **EP 4 323 249 B1**
(45) Date de publication et mention de la délivrance du brevet: **07.10.2026**
(21) Numéro de dépôt: 22722294.0
(22) Date de dépôt: 11.04.2022
(51) Int. Cl.: B60W 40/064, B60W 40/12, B60W 40/10, B60C 99/00

(54) **PROCÉDÉ D'ESTIMATION D'UN POTENTIEL D'ADHÉRENCE PNEU/SOL**
VERFAHREN ZUR SCHÄTZUNG DES POTENTIELLEN REIFEN-BODEN-GRIFFS
METHOD FOR ESTIMATING POTENTIAL TYRE-TO-GROUND GRIP

(30) Priorité: 12.04.2021 FR 2103733
(43) Date de publication de la demande: 21.02.2024
(73) Titulaire: COMPAGNIE GENERALE DES ETABLISSEMENTS MICHELIN, 63000 Clermont-Ferrand (FR)
(72) Inventeur: VAYSSETTES, Jérémy, 63040 CLERMONT-FERRAND Cedex 9 (FR); ARVIS, Vincent, 63040 CLERMONT-FERRAND Cedex 9 (FR); MUSSOT, Vincent, 63040 CLERMONT-FERRAND Cedex 9 (FR); DAIRAY, Thibault, 63040 CLERMONT-FERRAND Cedex 9 (FR); MERCERE, Guillaume, 86550 MIGNALOUX BEAUVOIR (FR)
(74) Mandataire: M.F.P. Michelin
(86) Numéro de dépôt international: PCT/FR2022/050682
(87) Numéro de publication internationale: WO 2022/219278

(56) Documents cités:
- EP-A1- 2 057 567
- US-B1- 6 549 842
- RAY LAURA R ET AL: "Nonlinear Tire Force Estimation and Road Friction Identification: Simulation and Experiments", AUTOMATICA (OXFORD), 1 January 1997 (1997-01-01), Oxford, pages 1819 - 1833, XP055869278, Retrieved from the Internet <URL:https://reader.elsevier.com/reader/sd/pii/S0005109897000939?token=931088EB56BF7CFC8B1B63436C1C166059FEAA0FB0982A616452FBAA6F0C0702906024B43970E4FB08EAC375C04F9057&originRegion=eu-west-1&originCreation=20211206110009> [retrieved on 20211203], DOI: 10.1016/S0005-1098(97)00093-9
- RAJESH RAJAMANI ET AL: "Tire-Road Friction-Coefficient Estimation", IEEE CONTROL SYSTEMS MAGAZINE, IEEE SERVICE CENTER, PISCATAWAY, NJ, US, vol. 30, no. 4, 1 August 2010 (2010-08-01), pages 54 - 69, XP011313179, ISSN: 0272-1708

## Description

La présente invention se situe dans le domaine de l'évaluation des paramètres de roulage d'un pneumatique sur un sol de roulage, et concerne plus précisément l'estimation d'un potentiel d'adhérence d'un pneumatique sur un sol.

Avec le développement des technologies embarquées, il devient possible d'obtenir de plus en plus d'informations concernant les conditions de roulage d'un véhicule. Il s'avère donc utile, pour alimenter les différents systèmes d'assistante à la conduite, ou de sécurité, des véhicules, de pouvoir connaître en temps réel le potentiel d'adhérence d'un pneumatique sur un sol, pour pouvoir prévenir tout risque de dérapage dû à une perte d'adhérence.

A fin de clarification, on précise ici que dans l'ensemble de la description on utilisera le symbole µ ou le terme « mu » pour désigner le coefficient d'adhérence d'un pneumatique sur le sol de roulage sur lequel il se trouve.

On connaît dans ce domaine, de nombreuses publications scientifiques et documents de brevet décrivant des méthodes permettant d'estimer de tels paramètres. On peut par exemple citer la demande de brevet EP3028909A1, qui porte sur une méthode intelligente d'estimation du niveau d'adhérence d'une route. On peut référencer également l'état d'art général (voir, par exemple, la publication de Ray Laura, «Nonlinear Tire Force Estimation and Road Friction Identfication : Simulation and Experiments », 1 janvier 1997 ).

Les méthodes existantes peuvent être classées en deux grandes catégories :
- les méthodes mettant en œuvre un ou plusieurs capteurs spécifiques, installés sur les véhicules, par exemple des capteurs acoustiques, thermiques, ou optiques, et
- les méthodes sans capteurs, qui s'appuient sur une reconstruction d'information à partir de données véhicules disponibles.

Les premières méthodes présentent un inconvénient majeur en termes de coût, d'intrusivité industrielle sur les véhicules, et de maintenance des équipements. Cet inconvénient ne se retrouve pas sur les méthodes sans capteur. Toutefois, il n'existe à ce jour aucune méthode sans capteur permettant de garantir un bon niveau d'estimation dans toutes les conditions de sollicitation. Ainsi, on connaît une méthode utilisant une valeur de couple d'alignement, qui présente l'inconvénient de ne fonctionner que pour les faibles sollicitations, car la valeur du couple d'alignement sature plus vite que l'effort latéral. Une autre méthode utilise un modèle pneumatique, mais qui ne prend pas en compte les caractéristiques thermiques du pneumatique, ce qui fausse la détermination à basses sollicitations. Toutefois, Toutes ces méthodes existantes se basent sur un principe commun, celui d'estimer de façon précise le maximum d'adhérence lorsqu'il est atteint ou proche de l'être (entre 80% et 100% de celui-ci). Toutefois, aucune de ces méthodes ne permet d'estimer un maximum d'adhérence dans des conditions de faibles sollicitations, par exemple lorsque les conditions de roulage sont telles que la sollicitation est inférieure à 40% du mu maximal.

On connaît également des méthodes de type machine-learning, qui n'utilisent aucune source d'information concernant le fonctionnement physique du pneumatique. Ces méthodes nécessitent toutefois des processus d'apprentissage très lourds à mettre en œuvre, et aucune méthode n'a pour l'instant prouvé son efficacité.

Enfin, on a constaté que de nombreuses méthodes visent à estimer un potentiel d'adhérence lorsque celui-ci a été atteint, ou proche de l'être, pour déclencher une action corrective immédiate sur un véhicule. C'est par exemple le cas des méthodes mises en œuvre par les systèmes de type ABS ou ESP, désormais largement déployées sur les véhicules poids-lourd et tourisme. Néanmoins, ces méthodes ne permettent pas de faire une estimation préventive de l'adhérence, qui permettrait de modifier en amont le comportement du véhicule pour ne pas avoir à déclencher d'action corrective.

La présente invention vise donc à proposer un procédé permettant de remédier aux nombreux inconvénients de l'état de la technique.

Ainsi, l'invention concerne un procédé d'estimation d'un potentiel d'adhérence d'un pneumatique sur un sol de roulageselon la revendication 1.

La première étape d'estimation permet d'observer les efforts générés par essieu, et retranscrits au centre roue. Cette étape s'appuie sur un modèle véhicule qui sera ultérieurement décrit à l'aide des figures.

Selon l'invention, le modèle véhicule est un modèle bicycle, et l'observateur d'état est un filtre de Kalman.

L'utilisation d'un modèle pneumatique thermomécanique dans la seconde étape d'estimation permet d'avoir une bonne représentation des différents phénomènes physiques affectant le potentiel d'adhérence, comme par exemple l'impact de la température. Cette prise en compte des effets thermiques permet de proposer un procédé beaucoup plus fiable que les méthodes de l'état de la technique.

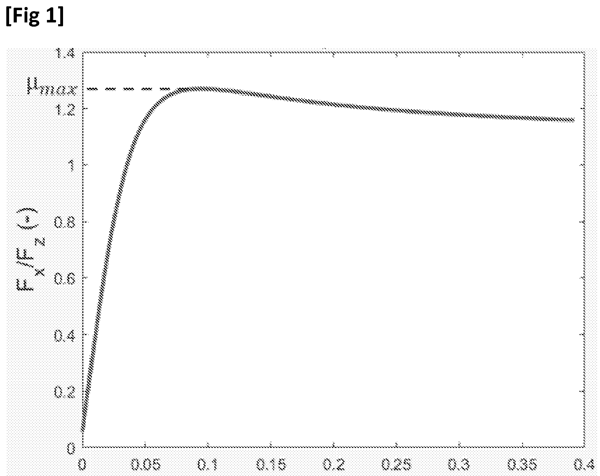

En effet, ainsi qu'illustré en figure 1, le potentiel d'adhérence correspond au maximum de la courbe de l'effort de friction longitudinal normalisée en fonction du taux de glissement. Ce maximum est indiqué par µₘₐₓ sur la courbe de la figure 1, qui montre en abscisse un taux de glissement entre 0 et 0.4, et en ordonnée l'effort de friction longitudinal Fₓ divisé par la charge verticale F_{z}.

L'estimation du µₘₐₓ doit pouvoir se faire y compris à basses sollicitations, à savoir dans la partie linéaire de la courbe de la figure 1 (glissement inférieur à 0.08). Or, on a constaté que la pente de cette partie linéaire dépendait de certaines grandeurs, et notamment de la température. Ainsi, ne pas prendre en compte les effets thermiques empêche d'estimer correctement le potentiel d'adhérence à basses sollicitations. Il en va de même pour d'autres paramètres tels que la pression, la charge ou l'usure.

Selon les modes de réalisation, plusieurs méthodes peuvent être utilisées pour réaliser l'étape de comparaison et de détermination d'un potentiel d'adhérence. On peut notamment citer les approches Bayésiennes, comme par exemple la méthode dite de Monte-Carlo Markov Chain. Ces méthodes seront ultérieurement décrites en détail.

Dans un mode de réalisation, le modèle thermomécanique du pneumatique comprend un modèle des efforts longitudinaux, des efforts transversaux, d'un couple d'auto-alignement et d'un équilibre des forces élémentaires de cisaillement et de glissement du pneumatique en un point de passage entre les zones de contact adhérent et glissant. Ce modèle est notamment décrit dans les demandes de brevet EP2057567 et EP2062176. Toutefois, l'invention n'est pas restreinte à ce mode de réalisation, et tout modèle thermomécanique de pneumatique peut être utilisé. Il est toutefois préférable d'utiliser un modèle thermomécanique prenant en compte au moins la pression de gonflage, la charge appliquée et l'usure du pneumatique.

Dans un mode de réalisation, un procédé selon l'invention comprend, au moins avant la seconde étape d'estimation, une étape de réduction du modèle pneumatique. Une telle caractéristique permet d'envisager la mise en œuvre d'un procédé selon l'invention en temps réel.

Cette étape de réduction peut comprendre avantageusement les sous-étapes suivantes :
- générer une matrice d'observations en utilisant le modèle thermodynamique pour différentes valeurs des paramètres du pneumatique, comme par exemple la charge, la pression ou encore la température,
- calculer les valeurs et vecteurs singuliers de cette matrice,
- calculer les coefficients de projection aux instants des observations, et
- faire une interpolation utilisable pour toutes les valeurs de paramètres.

Ainsi, l'utilisation d'un modèle réduit permet d'éviter de recourir à un calcul du modèle complet à chaque pas de temps, ce qui permet de diminuer les ressources en calcul nécessaire, et ainsi d'embarquer le modèle dans le véhicule pour une détermination temps-réel.

L'invention concerne également un système d'estimation d'un potentiel d'adhérence d'un pneumatique sur un sol de roulage, selon la revendication 7.

Selon un mode de réalisation, le système est tel que les différents moyens sont installés sur le véhicule.

Selon un mode de réalisation, le système comprend en outre des capteurs installés sur le véhicule.

D'autres avantages et modes de réalisation de l'invention seront décrits plus en détail, de manière non limitative, à l'aide des figures, parmi lesquelles :
- La [Fig 1], déjà décrite, montre une courbe d'effort de friction longitudinal normalisée en fonction du taux de glissement,
- La [Fig 2] est un schéma-blocs de principe d'un procédé selon l'invention,
- La [Fig 3] et [Fig 4] sont des représentations des forces s'exerçant sur un véhicule dans un modèle utilisé dans la présente invention.

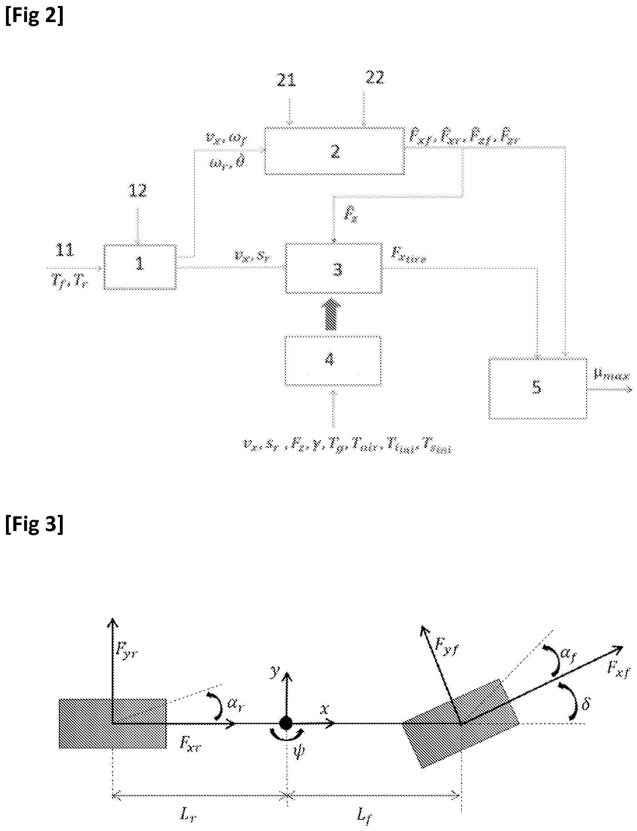

Un procédé selon l'invention comprend plusieurs étapes, mettant en œuvre différentes données, tel qu'illustré sur la figure 2.

Le tableau ci-après montre les significations des différents paramètres apparaissant sur la figure, ainsi que les unités.

**[Table 1]**

| Variable | Unité | Description |
|---|---|---|
| *vₓ* | *m*/*s* | Vitesse longitudinale du véhicule |
| *ω_{f}, ωᵣ* | *rad*/*s* | Vitesse des roues (avants et arrières) |
| *θ̇* | *rad*/*s* | Vitesse de tangage du véhicule |
| *T_{f}, Tᵣ* | *N. m* | Couple moteur et freineur du véhicule (avant et arrière) |
| *F_{xf}, Fₓᵣ* | *N* | Force de friction longitudinale (avant et arrière) |
| *F_{zf}, F_{zr}* | *N* | Charge verticale (avant et arrière) |
| *sᵣ* | - | Taux de glissement |
| *γ* | *rad* | Carrossage |
| *T_{g}* | °*C* | Température du sol |
| *Tₐᵢᵣ* | °*C* | Température de l'air |
| *Tᵢᵢₙᵢ* | °*C* | Température initiale interne du pneu |
| *Tₛᵢₙᵢ* | °*C* | Température initiale de surface du pneu |
| *µₘₐₓ* | - | Potentiel d'adhérence |

Le pneumatique considéré est installé sur un véhicule muni de différents capteurs. Partant du couple moteur et freineur, connu, du véhicule, et de données mesurées par les différents capteurs, on détermine au bloc 1 un ensemble de paramètres de roulage du véhicule 11, parmi lesquels une vitesse longitudinale du véhicule, un taux de glissement. On prend également en compte des perturbations éventuelles 12.

Ces données sont ensuite utilisées pour effectuer deux étapes d'estimation des efforts subis par le pneumatique. Une première étape, au bloc 2, consiste en la détermination des efforts subis par le pneumatique, en fonction d'un modèle véhicule 21, et de perturbations éventuelles 22.

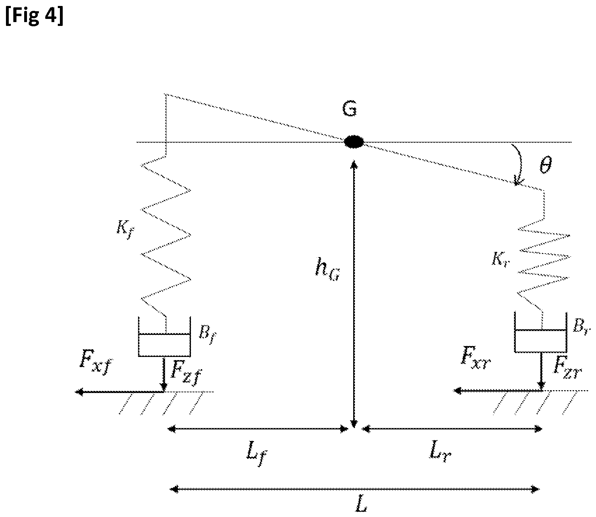

On utilisera avantageusement un modèle bicycle, tel que montré sur la figure 3, prenant en compte les dynamiques longitudinales et les variations de tangage. Pour prendre en compte ces variations de tangage, il est nécessaire de considérer en outre un modèle de suspensions, comme par exemple celui montré en figure 4.

L'utilisation du modèle bicycle et du modèle des suspensions conduit à une représentation d'état suivante : [Math 1] $\left\{\begin{matrix}\dot{x} = f \left(x, u, t\right) \\ y = h \left(x, t\right)\end{matrix}\right.$ Avec [Math 2] $\left\{\begin{matrix}x = {\left[{υ}_{x}, {ω}_{f}, {ω}_{r}, {F}_{xf}, {F}_{xr}, {\dot{F}}_{xf}, {\dot{F}}_{xr}, θ, \dot{θ}\right]}^{T} \\ u = {\left[{T}_{f}, {T}_{r}\right]}^{T} \\ y = {\left[{υ}_{x}, {ω}_{f}, {ω}_{r}, \dot{θ}\right]}^{T}\end{matrix}\right.$ Et [Math 3] $f = \left[\begin{matrix}{\dot{υ}}_{x} \\ {\dot{ω}}_{f} \\ {\dot{ω}}_{r} \\ {\dot{F}}_{xf} \\ {\dot{F}}_{xr} \\ {{F}^{¨}}_{xf} \\ {{F}^{¨}}_{xf} \\ \dot{θ} \\ {θ}^{¨}\end{matrix}\right] = \left[\begin{matrix}\frac{1}{m} \left[{F}_{xf}+{F}_{xr}-\frac{1}{2}{ρ}_{a}{S}_{a}{C}_{x}{υ}_{x}^{2}-{f}_{RR}\left({F}_{zf}+{F}_{zr}\right)\right] \\ \frac{1}{2 {I}_{wf}} \left[{T}_{f}-\left(R+αΔ{F}_{x}\right){F}_{xf}\right] \\ \frac{1}{2 {I}_{wr}} \left[{T}_{f}-\left(R-αΔ{F}_{x}\right){F}_{xr}\right] \\ {\dot{F}}_{xf} \\ {\dot{F}}_{xr} \\ 0 \\ 0 \\ \dot{θ} \\ \frac{1}{{I}_{v}} \left[\left({F}_{xf}+{F}_{xr}-{F}_{RR}\right){h}_{G}-{F}_{zf}{L}_{f}+{F}_{zr}{L}_{r}\right]\end{matrix}\right] et h = \left[\begin{matrix}{\dot{υ}}_{x} \\ {\dot{ω}}_{f} \\ {\dot{ω}}_{r} \\ \dot{θ}\end{matrix}\right]$

L'observateur d'état utilisé est un filtre de Kalman étendu.

On précise ici que les hypothèses principales du modèle bicycle sont les suivantes :
- angles de braquage avant-gauche = angle de braquage avant-droit,
- angles de braquages arrière nuls,
- véhicule évoluant sur un sol plan (pas de dévers).

En outre, dans ce modèle, les effets de tangage et de roulis sont souvent négligés.

Dans le présent exemple, les dynamiques de roulis sont bien négligées mais pas le tangage car on considère un système de suspension.

Une seconde étape, au bloc 3, estime les efforts subis à partir d'un modèle thermomécanique 4. Ce modèle est déterminé à partir d'un ensemble de paramètres, notamment la température. Via ce modèle, on peut calculer les valeurs de mu en fonction du taux de glissement dans les conditions de fonctionnement pneumatique rencontrées (à la pression, charge, température, etc...rencontrées au moment du calcul) afin de connaître le potentiel d'adhérence max pour la valeur de mu₀ fournie au modèle. En reproduisant cette procédure pour différents réglages de mu₀, on obtient une liste de muₘₐₓ correspondant à différents niveaux d'adhérence sol possibles.

Dans un mode de réalisation avantageux, le modèle initial est réduit pour permettre des calculs moins gourmands en ressources, et donc plus facile à embarquer directement dans un véhicule.

Les résultats des blocs 2 et 3 sont ensuite comparés, dans une étape 5, qui permet la détermination d'un potentiel d'adhérence.

La comparaison entre les forces estimées lors des deux précédentes parties se fait ici à l'aide d'une approche bayésienne. Ce type d'approche a l'avantage de fournir en plus de la valeur cherchée une probabilité associée. Pour la mettre en œuvre, il faut tout d'abord faire une hypothèse sur la densité de probabilité des forces estimées sachant le potentiel d'adhérence. Comme le filtre de Kalman fonctionne en considérant des bruits gaussiens, la densité de probabilité considérée choisie a une forme de gaussienne. On a ainsi [Math 4] $pr \left[\hat{F}\left|{μ}_{max}\right.\right] = \frac{1}{{\left(2π\right)}^{n / 2} {\left|S\right|}^{1 / 2}} exp \left(\frac{1}{2}{\left(\hat{F}-{F}_{tire}\right)}^{T}{S}^{- 1}{\left(\hat{F}-{F}_{tire}\right)}^{T}\right)$

On utilise ensuite la formule de Bayes pour déterminer la probabilité du potentiel d'adhérence sachant la force de friction, ce qui donne [Math 5] : $Pr \left[{μ}_{j}\left|{\hat{F}}_{k}\right.\right] = \frac{Pr \left[{\hat{F}}_{k}\left|{μ}_{j}\right.\right] Pr \left[{μ}_{j}\left|{\hat{F}}_{k - 1}\right.\right]}{{\sum }_{i = 1}^{J} Pr \left[{\hat{F}}_{k}\left|{μ}_{i}\right.\right] Pr \left[{μ}_{i}\left|{\hat{F}}_{k - 1}\right.\right]}$

Et on obtient ainsi le coefficient d'adhérence en faisant la somme pondérée [Math 6] ${\hat{μ}}_{k} = {\sum }_{i = 1}^{J} Pr \left[{μ}_{j}\left|{\hat{F}}_{k}\right.\right] {μ}_{j}$

Le potentiel d'adhérence est alors le maximum de cette somme pondérée.

Dans un autre exemple, on utilise non pas une méthode Bayésienne, mais une méthode de Monte-Carlo Markov Chain, dite MCMC.

Dans une méthode Bayésienne, µ est considéré comme une variable aléatoire discrète, ainsi, le dénominateur de la formule de Bayes est une somme discrète facilement calculable. En utilisant la méthode MCMC, il est possible de considérer µ comme une variable aléatoire continue et donc de gagner en précision. Cependant, dans ce cas, le dénominateur de la formule de Bayes n'est plus une somme discrète mais une intégrale qui est plus compliquée à calculer. Ainsi, la méthode MCMC propose de calculer des ratios de densité de probabilité afin de s'affranchir du dénominateur. Cette méthode a également l'avantage de fonctionner avec des mesures à basses sollicitations. Ces mesures dans notre approche sont les forces estimées à l'aide du filtre de Kalman.

Ainsi, un procédé selon l'invention permet de fournir une estimation fiable d'un potentiel d'adhérence. L'invention a été décrite en détail pour le cas longitudinal. Néanmoins, cette description n'est pas restrictive, et une approche similaire pourrait être envisagée pour le latéral, ou une combinaison des deux.

## Revendications

1. Procédé d'estimation d'un potentiel d'adhérence d'un pneumatique sur un sol de roulage, le pneumatique étant installé sur un véhicule équipé de capteurs, le procédé comprenant les étapes suivantes :
- une première étape d'estimation d'un effort subi par le pneumatique, à partir de données issues des capteurs, en fonction d'un modèle véhicule (21) et d'un observateur d'état,
- une seconde étape d'estimation d'un effort subi par le pneumatique, en fonction d'un modèle thermomécanique (4) du pneumatique, ledit modèle thermomécanique étant déterminé à partir d'un ensemble de paramètres, notamment la température,
- une étape de comparaison statistique des efforts déterminés au cours de la première et seconde étapes d'estimation, et
- une étape (5) de détermination, en fonction du résultat de cette étape de comparaison, d'une valeur du potentiel d'adhérence pneu/sol ; le modèle véhicule étant un modèle de suspensions et un modèle de bicycle, configuré pour prendre en compte les dynamiques longitudinales et les variations de tangages, et l'observateur d'état étant un filtre de Kalman.

2. Procédé d'estimation selon la revendication 1, dans lequel l'étape de comparaison met en œuvre une méthode d'approche Bayésienne.

3. Procédé d'estimation selon la revendication 1, dans lequel l'étape de comparaison met en œuvre une méthode dite de Monte-Carlo Markov Chain.

4. Procédé d'estimation selon l'une des revendications précédentes, dans lequel le modèle thermomécanique (4) du pneumatique comprend un modèle des efforts longitudinaux, des efforts transversaux, d'un couple d'auto-alignement et d'un équilibre des forces élémentaires de cisaillement et de glissement du pneumatique en un point de passage entre les zones de contact adhérent et glissant.

5. Procédé d'estimation selon l'une des revendications précédentes, comprenant, au moins avant la seconde étape d'estimation, une étape de réduction du modèle pneumatique.

6. Procédé d'estimation selon l'une des revendications précédentes, dans lequel l'ensemble des étapes sont effectuées en temps réel.

7. Système d'estimation d'un potentiel d'adhérence d'un pneumatique sur un sol de roulage, le pneumatique étant installé sur un véhicule, et le système comprenant :
- des moyens d'estimation d'un effort subi par le pneumatique, en fonction d'un modèle véhicule (21) et d'un observateur d'état,
- des moyens d'estimation d'un effort subi par le pneumatique, en fonction d'un modèle thermomécanique (4) du pneumatique, ledit modèle thermomécanique étant déterminé à partir d'un ensemble de paramètres, notamment la température,
- des moyens de comparaison statistique des efforts déterminés au cours de la première et seconde étapes d'estimation, et
- des moyens de détermination, en fonction du résultat de cette étape de comparaison, d'une valeur du potentiel d'adhérence pneu/sol ; le modèle véhicule étant un modèle de suspensions et un modèle de bicycle, configuré pour prendre en compte les dynamiques longitudinales et les variations de tangages, et l'observateur d'état étant un filtre de Kalman.

8. Système d'estimation selon la revendication 7, dans lequel les différents moyens sont installés sur le véhicule.

9. Système d'estimation selon la revendication 8, comprenant en outre des capteurs installés sur le véhicule.

## Patentansprüche

1. Verfahren zum Schätzen eines Kraftschlusspotentials eines Reifens auf einem Fahrboden, wobei der Reifen an einem Fahrzeug installiert ist, das mit Sensoren ausgestattet ist, wobei das Verfahren die folgenden Schritte umfasst:
- einen ersten Schritt des Schätzens einer Kraft, die der Reifen erfährt, ausgehend von Daten, die aus den Sensoren hervorgegangen sind, in Abhängigkeit von einem Fahrzeugmodell (21) und einem Zustandsbeobachter,
- einen zweiten Schritt des Schätzens einer Kraft, die der Reifen erfährt, in Abhängigkeit von einem thermomechanischen Modell (4) des Reifens, wobei das thermomechanische Modell ausgehend von einem Satz von Parametern, insbesondere der Temperatur, bestimmt wird,
- einen Schritt des statistischen Vergleichens der während des ersten und zweiten Schritts des Schätzens bestimmten Kräfte, und
- einen Schritt (5) des Bestimmens, in Abhängigkeit von dem Ergebnis dieses Schritts des Vergleichens, eines Werts des Reifen/Boden-Kraftschlusspotentials;
wobei das Fahrzeugmodell ein Aufhängungsmodell und ein Fahrradmodell ist und dazu ausgelegt ist, die Längsdynamiken und Nickschwankungen zu berücksichtigen, und wobei der Zustandsbeobachter ein Kalman-Filter ist.

2. Verfahren zum Schätzen nach Anspruch 1, wobei der Vergleichsschritt eine Bayes-Ansatz-Methode einsetzt.

3. Verfahren zum Schätzen nach Anspruch 1, wobei der Vergleichsschritt eine Markov-Chain-Monte-Carlo-Methode einsetzt.

4. Verfahren zum Schätzen nach einem der vorhergehenden Ansprüche, wobei das thermomechanische Modell (4) des Reifens ein Modell der Längskräfte, der Querkräfte, eines Rückstellmoments und eines Gleichgewichts der elementaren Scher- und Gleitkräfte des Reifens an einem Übergangspunkt zwischen den haftenden und gleitenden Kontaktbereichen umfasst.

5. Verfahren zum Schätzen nach einem der vorhergehenden Ansprüche, das mindestens vor dem zweiten Schritt des Schätzens einen Schritt des Reduzierens des Reifenmodells umfasst.

6. Verfahren zum Schätzen nach einem der vorhergehenden Ansprüche, wobei alle Schritte in Echtzeit ausgeführt werden.

7. System zum Schätzen eines Kraftschlusspotentials eines Reifens auf einem Fahrboden, wobei der Reifen an einem Fahrzeug installiert ist und wobei das System umfasst:
- Mittel zum Schätzen einer Kraft, die der Reifen erfährt, in Abhängigkeit von einem Fahrzeugmodell (21) und einem Zustandsbeobachter,
- Mittel zum Schätzen einer Kraft, die der Reifen erfährt, in Abhängigkeit von einem thermomechanischen Modell (4) des Reifens, wobei das thermomechanische Modell ausgehend von einem Satz von Parametern, insbesondere der Temperatur, bestimmt wird,
- Mittel zum statistischen Vergleichen der während des ersten und zweiten Schritts des Schätzens bestimmten Kräfte, und
- Mittel zum Bestimmen, in Abhängigkeit von dem Ergebnis dieses Schritts des Vergleichens, eines Werts des Reifen/Boden-Kraftschlusspotentials;
wobei das Fahrzeugmodell ein Aufhängungsmodell und ein Fahrradmodell ist und dazu ausgelegt ist, die Längsdynamiken und Nickschwankungen zu berücksichtigen, und wobei der Zustandsbeobachter ein Kalman-Filter ist.

8. System zum Schätzen nach Anspruch 7, wobei die verschiedenen Mittel an dem Fahrzeug installiert sind.

9. System zum Schätzen nach Anspruch 8, das ferner Sensoren umfasst, die an dem Fahrzeug installiert sind.

## Claims

1. Estimation method for estimating tyre-to-ground grip potential of a tyre with respect to the ground on which it is running, the tyre being fitted to a vehicle equipped with sensors, the method comprising the following steps:
- a first step of estimating a force experienced by the tyre, based on data from the sensors, as a function of a vehicle model (21) and of a state observer,
- a second step of estimating a force experienced by the tyre as a function of a thermomechanical model (4) of the tyre, wherein said thermomechanical model is determined based on a set of parameters, including temperature,
- a step of statistically comparing the forces determined during the first and second estimating steps, and
- a step (5) of determining, as a function of the result of this comparison step, a value of the tyre/ground grip potential, the vehicle model being a suspension model and a bicycle model, configured to account for longitudinal dynamic changes and variations in pitching, the state observer bieng a Kalman filter.

2. Estimation method according to Claim 1, wherein the comparison step employs a Bayesian logic method.

3. Estimation method according to Claim 1, wherein the comparison step employs a Monte-Carlo Markov Chain method.

4. Estimation method according to one of the preceding claims, wherein the thermomechanical model (4) of the tyre comprises a model of the longitudinal forces, of the transverse forces, of a self-aligning torque and of a balance of the elementary shearing and slipping forces on the tyre at a point of transition between the regions of contact with grip and contact with slip.

5. Estimation method according to one of the preceding claims, comprising, at least before the second estimating step, a step of reducing the tyre model.

6. Estimation method according to one of the preceding claims, wherein all of the steps are performed in real time.

7. Estimation system for estimating grip potential of a tyre on ground on which it is running, the tyre being fitted to a vehicle and the system comprising:
- estimating means for estimating a force experienced by the tyre as a function of a vehicle model (21) and of a state observer,
- estimating means for estimating a force experienced by the tyre as a function of a thermomechanical model of the tyre, wherein said thermomechanical model is determined based on a set of parameters, including temperature,
- statistical comparison means for statistically comparing the forces determined during the first and second estimating steps, and
- determining means for determining, as a function of the result of this comparison step, a value of the tyre/ground grip potential, the vehicle model being a suspension model and a bicycle model, configured to account for longitudinal dynamic changes and variations in pitching, the state observer bieng a Kalman filter.

8. Estimation system according to Claim 7, wherein the various means are installed on the vehicle.

9. Estimation system according to Claim 8, further comprising sensors installed on the vehicle.
